# EUROPÄISCHE PATENTSCHRIFT

(11) **EP 3 820 249 B1**
(45) Veröffentlichungstag und Bekanntmachung des Hinweises auf die Patenterteilung: **22.12.2021**
(21) Anmeldenummer: 20191944.6
(22) Anmeldetag: 20.08.2020
(51) Int. Cl.: H05B 6/64, F24C 15/08, F24C 15/00

(54) **DICHTUNGSANORDNUNG FÜR EIN GARGERÄT**
SEAL ARRANGEMENT FOR A COOKING DEVICE
AGENCEMENT D'ÉTANCHÉITÉ POUR UN APPAREIL DE CUISSON

(30) Priorität: 06.11.2019 DE 202019106167 U
(43) Veröffentlichungstag der Anmeldung: 12.05.2021
(73) Patentinhaber: BJB GmbH & Co. KG, 59755 Arnsberg (DE)
(72) Erfinder: Baumeister, Olaf, 59846 Sundern (DE); Harnischmacher, Jörg, 58706 Menden (DE)
(74) Vertreter: Ostriga Sonnet Wirths & Vorwerk

(56) Entgegenhaltungen:
- DE-A1-102017 108 946
- FR-A1- 2 414 170
- GB-A- 2 043 369
- US-A1- 2018 156 443

## Beschreibung

Die Erfindung betrifft eine Dichtungsanordnung für ein Gargerät wie Ofen, Dampfgarer oder Mikrowelle zur Abdichtung einer Öffnung in der Garraumwandung, die Durchführung eines der Garraumbeleuchtung dienenden Leuchtenelementes, insbesondere eines Glasstabes mit einer im Wesentlichen kreiszylindrischen Form dient, mit einem Gehäuseteil, welches mit einer ersten Dichtung gegenüber der Garraumwandung abgedichtet ist und eine Aufnahme für eine zweite Dichtung aufweist, die das Gehäuseteil gegenüber dem Leuchtenelement abdichtet, mit Halteteilen, die das Gehäuseteil an der Garraumwandung anordnen, wobei die zweite Dichtung ein Graphitring ist, innerhalb dessen Ringraum das Leuchtenelement anordenbar ist. Das Dokument FR 2414170 A1 offenbart eine Dichtungsanordnung gemäß des Oberbegriffs von Anspruch 1.

Dichtungsanordnungen sind in vielfältiger Art aus dem druckschriftlich nicht belegbaren Stand der Technik bekannt. Sie finden in Gargeräten unterschiedlichster Art, insbesondere Öfen, Dampfgarern oder Mikrowellen Anwendung, um die beim Garen von Speisen entstehenden Wrasen an einem Durchtritt durch die Beleuchtungsöffnungen der Garraumwand in den dahinter liegenden Geräteraum zu verhindern. Der zunehmende Einsatz von LED-Lichtquellen für die Beleuchtung von Garräumen führt in zunehmendem Maße zum Einsatz von Lichtleitern, welche das von der LED emittierte Licht in den Garraum leiten. Hierbei werden häufig Glasstäbe oder Stäbe aus temperaturbeständigem Kunststoff verwendet. Dies hat den wesentlichen Vorteil, dass die temperaturempfindlichen LED-Lichtquellen weit vom beheizten Garraum entfernt angeordnet werden können.

Die Lichtleitstäbe durchdringen die Garraumwandung durch entsprechende Öffnungen, die gegen den Durchtritt von Wrasen abgedichtet werden müssen.

Aufgabe der Erfindung ist es, hier eine vorteilhafte Dichtungsanordnung zu schaffen.

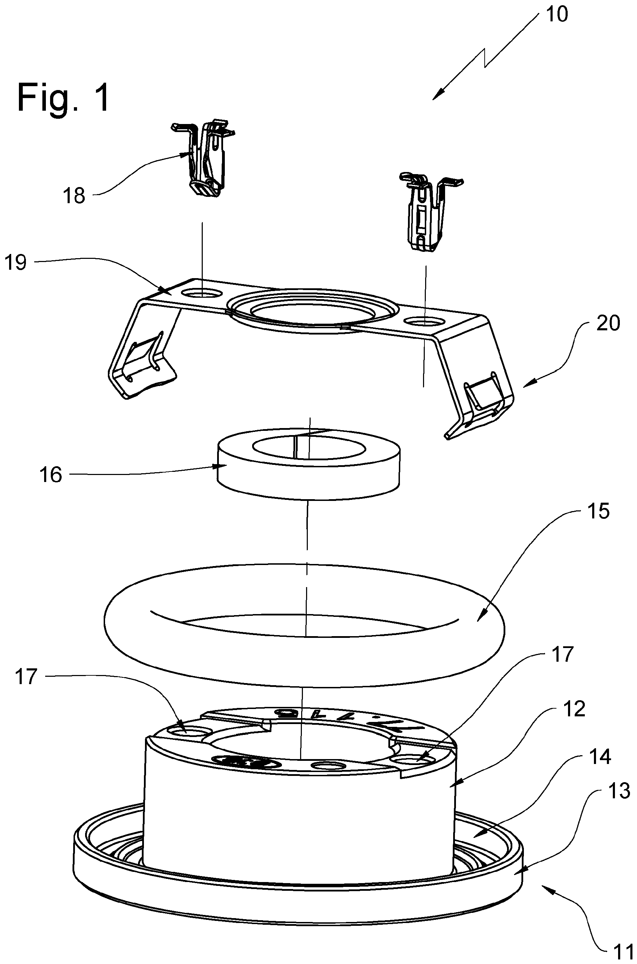

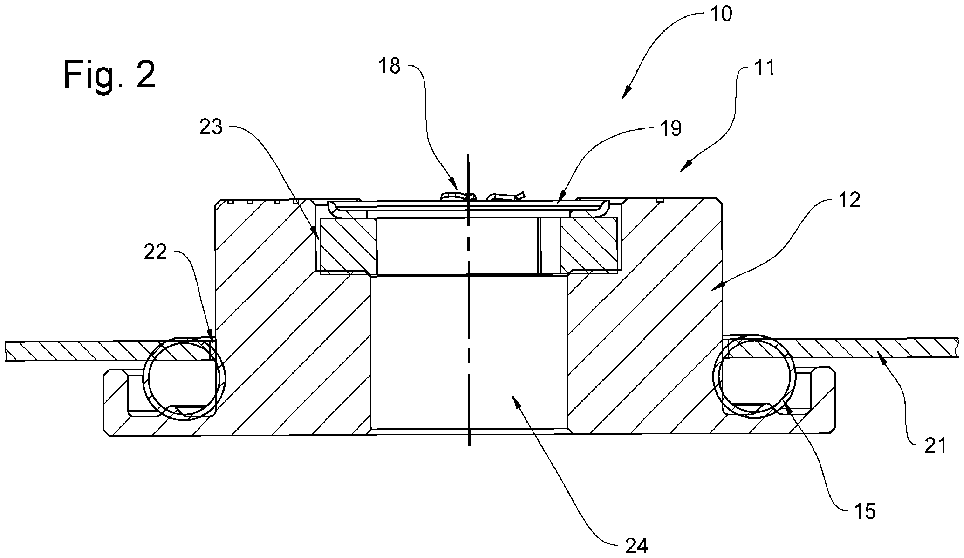

Diese Aufgabe wird gelöst von einer Dichtungsanordnung mit den Merkmalen des Anspruches 1. Vorteilhafte Ausgestaltungen finden sich in den Unteransprüchen. Im Übrigen wird die Erfindung nunmehr anhand der Figuren 1 und 2 erläutert. Dabei zeigt
- Figur 1: eine Explosionsansicht der erfindungsgemäßen Dichtungsanordnung und
- Figur 2: die Dichtungsanordnung gemäß Figur 1 in Einbausituation in Schnittdarstellung.

In den Figuren ist eine erfindungsgemäße Dichtungsanordnung insgesamt mit der Bezugsziffer 10 versehen. Die Einzelteile der Dichtungsanordnung sind insbesondere aus der Explosionsdarstellung in Figur 1 ersichtlich. Die Dichtungsanordnung umfasst zunächst ein Gehäuseteil 11 mit einem kreiszylindrischen Grundkörper 12, der an seinem einen Ende einen umfangserweiterten Kragen 13 ausbildet. Der Kragen 13 bildet eine in Richtung freiem Ende des Grundkörpers 12 offene Ringnut 14. Die Ringnut 14 nimmt eine erste Dichtung in Form der Ringdichtung 15 auf.

An seinem dem Kragen 13 abgewandten Ende verfügt der Grundkörper 12 über eine nicht näher bezeichnete Aufnahme für einen Dichtring 16. Im Übrigen verfügt der Grundkörper über Befestigungsausnehmungen 17, in welche Haltemittel 18 eingreifen, um eine Halteklammer 19 am Grundkörper 12 zu befestigen. Die Enden 20 der Halteklammer 19 sind federrückstellelastisch ausgeführt.

Figur 2 zeigt eine Schnittdarstellung der Einbausituation der Dichtungsanordnung 10 gemäß Figur 1. Ergänzend zu Figur 1 ist in Figur 2 ein Teil einer Garraumwandung 21 dargestellt, die eine Öffnung 22 zur Durchführung eines Leuchtenelementes, insbesondere eines stabförmigen, zylindrischen Lichtleiters, beispielsweise eines Glasstabes oder Kunststoffstabes, aufweist.

Die Dichtungsanordnung 13 ist in diese Öffnung 22 eingesetzt, wobei der Grundkörper 12 in der Öffnung 22 gelagert ist. Der Kragen 13 ist garraumseitig gegen die Garraumwandung 21 gelegt, so dass die Ringdichtung 15 einerseits gegen den Kragen 13 und andererseits gegen die Garraumwandung 21 dichtet. Ein Durchzug von Wrasen zwischen dem Grundkörper 12 und der Garraumwandung 21 wird so sicher vermieden.

Die Schnittdarstellung gemäß Figur 2 zeigt nunmehr die Dichtungsaufnahme 23 als eine gegenüber dem Ringraum 24 des Grundkörpers umfangserweiterte Einsenkung ausgebildet ist. In diese Dichtungsaufnahme 23 ist der Dichtring 16 eingelegt. Er dichtet einerseits gegenüber dem Grundkörper 12 und andererseits gegenüber einem hier nicht dargestellten, den Dichtring 16 durchtretenden und im Ringraum 24 des Grundkörpers 12 gelagerten Lichtleitstabes ab. Das Gehäuseteil 11 wird von der Halteklammer 19 an der Garraumwand 21 gehalten. Hierbei stützen sich in einer in Figur 2 nicht dargestellten Weise die federrückstellelastischen Enden 20 der Halteklammer 19 an der dem Garraum abgewandten Außenoberfläche der Garraumwandung 21 ab. Die Federrückstellkräfte verspannen hierbei den Kragen 13 gegen die Garraumwandung und sorgen für einen dichtenden Sitz der Ringdichtung 15.

Der Dichtring 16, der gegenüber dem Lichtleitstab dichtend wirkt, ist aus einem geeigneten Dichtmaterial auszuführen. In einer besonders bevorzugten Ausführungsform der Erfindung handelt es sich hierbei um Graphit. Dieses Graphit wird in einer geeigneten Form auf den Lichtleitstab im Hinblick auf seinen Wärmeausdehnungskoeffizienten abgestimmt. Bevorzugt ist ein nahezu identischer Wärmeausdehnungskoeffizient von Lichtleitstab und Graphitring. Besonders bevorzugt ist ein leicht höherer Wärmeausdehnungskoeffizient des Graphitrings gegenüber dem Wärmeausdehnungskoeffizienten des Lichtleitstabes. Ein höherer Wärmeausdehnungskoeffizient des Graphitrings führt dazu, dass sich dieser unter Temperatureinfluss stärker räumlich ausdehnt als der Lichtleitstab. Hierbei führt dies zu einem entsprechenden Dichtschluss zwischen Dichtring 16 und Lichtleitstab.

Ein entsprechender Dichtschluss lässt sich auch erreichen, indem der Dichtring 16 beispielsweise mit einem leichten Untermaß gegenüber dem Lichtleitstab gefertigt ist. In diesem Fall ist es dann von besonderem Vorteil, wenn der Dichtring 16 entlang einer Schnittlinie aufgetrennt ist. Dies gewährleistet, dass sich der Dichtring 16 beim Einschieben des Lichtleitstabes in den Ringraum 24 des Grundkörpers bzw. in den Ringraum des Dichtringes 16 leicht weiten kann.

Wenn der Winkel der Schnittlinie, entlang der der Graphitring aufgetrennt ist, in einem Winkel > 0° zu einer entsprechenden Radiallinie des Dichtringes 16 steht, verbessert dies die Dichtigkeit. Durch eine entsprechend winklige Anordnung der Schnittlinie wird der Wrasendurchtritt durch einen möglichen Spalt erschwert. Als ideal wird ein Winkel zwischen 40° und 50° zur Radiallinie, insbesondere 45° zur Radiallinie, angesehen.

Wenn auf die oben genannten Wärmeausdehnungskoeffizienten-Verhältnisse geachtet wird, ist es denkbar, den Dichtring 16 derart auszubilden, dass sich ein möglicher Schnitt- bzw. Trennspalt durch Materialausdehnung unter Hitzeeinwirkung schließt.

Da der Reibschluss zwischen Graphit und einem Lichtleitstab, insbesondere einem aus Glas gefertigten Lichtleitstab, als ausgesprochen gering erweist, kann die Dichtigkeit des Dichtringes gegenüber dem Lichtleitstab auch durch Maßgleichheit zwischen Ringraumdurchmesser des Dichtringes 16 und Durchmesser des Glasstabes herstellen. Es ist letztlich jedoch auch denkbar, dass der Dichtring 16 mit leichtem Übermaß gegenüber dem einzusetzenden Lichtleitstab gefertigt ist. Beachtet man wiederum die Verhältnisse der Wärmeausdehnungskoeffizienten, so lässt sich diese Übermaßfertigung vertreten, da der Dichtschluss zwischen Dichtring 16 und Lichtleitstab unter Temperatureinwirkung hergestellt wird.

### Bezugszeichenliste:

- 10: Dichtungsanordnung
- 11: Gehäuseteil
- 12: Grundkörper
- 13: Kragen
- 14: Ringnut
- 15: Ringdichtung
- 16: Dichtring
- 17: Befestigungsausnehmungen
- 18: Haltemittel
- 19: Halteklammer
- 20: Ende von 19

- 21: Garraumwandung
- 22: Öffnung

- 23: Dichtungsaufnahme
- 24: Ringraum

## Patentansprüche

1. Dichtungsanordnung (10) für ein Gargerät wie Ofen, Dampfgarer oder Mikrowelle zur Abdichtung einer Öffnung (22) in der Garraumwandung (21), die Durchführung eines der Garraumbeleuchtung dienenden Leuchtenelementes, insbesondere eines Glasstabes mit einer im Wesentlichen kreiszylindrischen Form dient, **gekennzeichnet durch** mit einem Gehäuseteil (11), welches mit einer ersten Dichtung (15) gegenüber der Garraumwandung (21) abgedichtet ist und eine Aufnahme für eine zweite Dichtung (16) aufweist, die das Gehäuseteil (11) gegenüber dem Leuchtenelement abdichtet, mit Halteteilen (18), die das Gehäuseteil (21) an der Garraumwandung (21) anordnen, wobei die zweite Dichtung (16) ein Graphitring ist, innerhalb dessen Ringraum (24) das Leuchtenelement anordenbar ist.

2. Dichtungsanordnung (10) nach Anspruch 1, **dadurch gekennzeichnet, dass** der Graphitring entlang einer Schnittlinie aufgetrennt ist.

3. Dichtungsanordnung (10) nach Anspruch 2, **dadurch gekennzeichnet, dass** die Schnittlinie in einem Winkel > 0 Grad zu einer Radiallinie des Dichtrings (16) ausgerichtet ist, wobei die Schnittlinie insbesondere in einem Winkel von 45 Grad zur Radiallinie des Dichtrings (16) ausgerichtet ist.

4. Dichtungsanordnung (10) nach einem der Ansprüche 1 bis 3, **dadurch gekennzeichnet, dass** der Dichtungsring (16) mit Untermaß, Übermaß oder im Gleichmaß zur Umfangskontur des innerhalb des Dichtrings anordenbaren Leuchtenelementes gefertigt ist.

5. Dichtungsanordnung (10) nach einem der vorhergehenden Ansprüche, **dadurch gekennzeichnet, dass** der Wärmeausdehnungskoeffizient des Dichtrings (16) dem Wärmeausdehnungskoeffizienten des Leuchtenelementes in etwa entspricht oder größer ist als derjenige des Leuchtenelementes.

## Claims

1. Sealing arrangement (10) for a cooking device such as an oven, steamer or microwave for sealing an opening (22) in the cooking chamber wall (21), which serves to implement an illumination element serving to illuminate the cooking chamber, in particular a glass rod with a substantially circular cylindrical shape, **characterised by** having a housing part (11), which is sealed to the cooking chamber wall (21) by a first seal (15) and has a receiver for a second seal (16), which seals the housing part (11) to the illumination element, having holding parts (18), which arrange the housing part (21) on the cooking chamber wall (21), wherein the second seal (16) is a graphite ring, the illumination element being able to be arranged inside the ring chamber (24) thereof.

2. Sealing arrangement (10) according to claim 1, **characterised in that** the graphite ring is separated along a cutting line.

3. Sealing arrangement (10) according to claim 2, **characterised in that** the cutting line is aligned at an angle of >0 degrees in relation to a radial line of the sealing ring (16), wherein the cutting line is aligned, in particular, at an angle of 45 degrees in relation to the radial line of the sealing ring (16).

4. Sealing arrangement (10) according to one of claims 1 to 3, **characterised in that** the sealing ring (16) is produced with undersize, oversize or in proportion in relation to the peripheral contour of the illumination element that can be arranged inside the sealing ring.

5. Sealing arrangement (10) according to one of the preceding claims, **characterised in that** the thermal expansion coefficient of the sealing ring (16) roughly corresponds to the thermal expansion coefficient of the illumination element or is greater than that of the illumination element.

## Revendications

1. Structure d'étanchéité (10) pour un appareil de cuisson tel qu'un four, un four à vapeur ou un four à microondes pour étanchéifier une ouverture (22) dans la cloison de chambre de cuisson (21) qui sert à l'insertion d'un élément d'éclairage servant à l'éclairage de la chambre de cuisson, un particulier d'une barre de verre de forme sensiblement cylindrique, **caractérisée par** une pièce de boîtier (11) qui est étanchéifiée par rapport à la cloison de chambre de cuisson (21) avec un premier joint (15) et présente un logement pour un deuxième joint (16) qui étanchéifie la pièce de boîtier (11) par rapport à l'élément d'éclairage, avec des pièces de maintien (18) qui disposent la pièce de boîtier (21) contre la cloison de chambre de cuisson (21), le deuxième joint (16) étant une bague de graphite à l'intérieur de l'espace annulaire (24) de laquelle l'élément d'éclairage peut être agencé.

2. Structure d'étanchéité (10) selon la revendication 1, **caractérisée en ce que** l'anneau de graphite est ouvert le long d'une ligne de coupe.

3. Structure d'étanchéité (10) selon la revendication 2, **caractérisée en ce que** la ligne de coupe est orientée selon un angle > 0 degré par rapport à une ligne radiale de la bague d'étanchéité (16), la ligne de coupe étant en particulier orientée selon un angle de 45 degrés par rapport à la ligne radiale de la bague d'étanchéité (16).

4. Structure d'étanchéité (10) selon une des revendications 1 à 3, **caractérisée en ce que** la bague annulaire (16) est fabriquée à des dimensions inférieures, supérieures ou égales au contour périphérique de l'élément d'éclairage pouvant être agencé à l'intérieur de la bague annulaire.

5. Structure d'étanchéité (10) selon une des revendications précédentes, **caractérisée en ce que** le coefficient de dilatation thermique de la bague d'étanchéité (16) correspond sensiblement au coefficient de dilatation thermique de l'élément d'éclairage ou est supérieur à celui de l'élément d'éclairage.
